(19) Europäisches Patentamt
European Patent Office
Office européen des brevets

(11) Veröffentlichungsnummer : **0 400 402 B1**

# (12) EUROPÄISCHE PATENTSCHRIFT

(45) Veröffentlichungstag der Patentschrift : **06.10.93 Patentblatt 93/40**

(51) Int. Cl.$^5$ : **C09K 21/06**

(21) Anmeldenummer : **90109299.9**

(22) Anmeldetag : **17.05.90**

## (54) Brandschutzelemente.

(30) Priorität : **30.05.89 DE 3917518**

(43) Veröffentlichungstag der Anmeldung : **05.12.90 Patentblatt 90/49**

(45) Bekanntmachung des Hinweises auf die Patenterteilung : **06.10.93 Patentblatt 93/40**

(84) Benannte Vertragsstaaten : **BE DE DK ES FR GB IT NL SE**

(56) Entgegenhaltungen :
**EP-A- 0 056 267**
**EP-A- 0 217 080**
**DE-A- 3 625 080**

(73) Patentinhaber : **BAYER AG**
**D-51368 Leverkusen (DE)**

(72) Erfinder : **Von Bonin, Wulf, Dr.**
**Droste-Hülshoff-Strasse 9**
**D-5068 Odenthal (DE)**
Erfinder : **Schäpel, Dietmar, Dr.**
**Johanniterstrasse 15**
**D-5000 Köln 80 (DE)**

**EP 0 400 402 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Brandschutzelemente auf der Basis von Schaumstoffen, die Blähgraphit und mindestens eine weitere Komponente enthalten und deren Verwendung als Konstruktionsmaterial.

Bisher übliche Brandschutzelemente auf Schaumstoffbasis haben erhebliche Nachteile. Sie spalten im Brandfall chlorhaltige Gase ab, schrumpfen stark bei Erhitzung, ergeben Intumeszenzschäume mit unzureichendem Widerstand gegen Flammenerosion, schmelzen und tropfen oder rutschen bei Beflammung vom Einsatzort weg und/oder haben einen zu geringen Blähdruck. Alle diese Eigenschaften sind unerwünscht. Insbesondere ein wirkungsvoller Verschluß von z.B. Türfugen sollte im Beflammungsfall gewährleistet sein.

Aus der EP-B1 0 009 109 ist ein thermisch expandierbares Dichtungsmaterial für Fugen, Hohlräume oder dergleichen bekannt, bei dem ein Vlies oder Gewebe mit einem Gemisch aus Blähgraphit, Polychloropren, Alkylphenol-Formaldehyd-Harz und Stabilisatoren beschichtet ist. Nachteilig ist bei diesem Material insbesondere, daß es im Brandfall chlorhaltige Gase abgibt.

Aus der GB-A 2 168 706 ist ein flammhemmender Polyurethanschaum bekannt, der Blähgraphit enthält. Von diesem Material wird beschrieben, daß es für flammhemmende Polster verwendbar ist und die entsprechenden Tests bestanden hat. Da in Bezug auf das Raumgewicht die Anforderungen an Brandschutzelemente, insbesondere in mechanischer Hinsicht und im Verhalten in Brandtests, wesentlich höher sind, konnte nicht erwartet werden, daß die Kombination Schaumstoff/Blähgraphit in Kombination mit anderen Materialien auch als Brandschutzelemente geeignet sein könnte.

Es wurden nun Brandschutzelemente auf der Basis von Schaumstoffen, die Blähgraphit und gegebenenfalls übliche Zusätze enthalten, gefunden, die dadurch gekennzeichnet sind, daß sie zusätzlich 2 bis 30 Gew.-% phosphorhaltige Polyole der Formel $(RO)_2PO\text{-}CH_2\text{-}N{=}(CHX\text{-}CHX\text{-}OH)_2$, in der R für $C_1$-$C_8$-Alkyl oder $C_1$-$C_8$-Hydroxyalkyl steht und X Wasserstoff oder Methyl bedeutet, 2 bis 30 Gew.-% Borate und/oder 2 bis 30 Gew.-% Melamin- und/oder Ethylendiaminsalze enthalten, wobei die Summe dieser 3 Komponenten nicht mehr als 50 Gew.-% beträgt. Es wurde weiterhin die Verwendung derartiger Brandschutzelemente als Konstruktionsmaterial gefunden.

Als Schaumstoffe kommen beispielsweise organische oder anorganische Schaumstoffe mit geschlossenen oder offenzelligen Hohlräumen in Frage, aber auch Vliese und Watten aus organischen oder anorganischen Materialien, sowie Mineralwollformkörper. Basismaterialien für Schaumstoffe, Vliese oder Watten können beispielsweise sein: Gips, Wasserglas, Cellulose, Polyolefine, Polyalkylenoxide, Formaldehydharze wie Phenol-, Harnstoff-, Melamin- und/oder Dicyandiamid-Formaldehyd-Harze, Polyvinylhalogenide, Polyvinylaromaten, Polyamide, Polyacrylate, Dienpolymerisate, Polyphosphacene, Silikone und insbesondere Polyurethane. Aus diesen Materialien können Schaumstoffe, Vliese oder Watten auf an sich bekannte Weise hergestellt werden. Beispielsweise kann man Schaumstoffe durch Aufschäumen eines zunächst flüssigen Mehrkomponentengemisches oder durch Schaumigschlagen von Latexschäumen und anschließendem Aushärten oder Koagulieren erhalten. Die Schaumstoffe können auch schon in üblicher Weise brandwidrig ausgerüstet sein und/oder übliche brandwidrige Zusatzstoffe, übliche sonstige Füllstoffe und/oder übliche Hilfsstoffe enthalten. Derartige Zusatz- und Füllstoffe können z.B. in Faser-, Kügelchen-, Hohlkügelchen-, Pulver- oder Plättchenform vorliegen. Es kann sich dabei beispielsweise um Aluminiumhydroxid, Vermiculit, Polyammoniumphosphat, Magnesiumhydroxid, Glaspulver, Glaskügelchen, Mikroglashohlkugeln, Kalkstickstoff, Kalziumcarbonat und/oder Aluminosilikate handeln.

Die für erfindungsgemäße Brandschutzelemente bevorzugten Polyurethanschaumstoffe können beispielsweise aus üblichen Polyisocyanaten und üblichen Polyolen, gegebenenfalls unter Verwendung üblicher Hilfsmittel, hergestellt werden. Als Polyole sind beispielsweise aliphatische, cycloaliphatische, araliphatische, aromatische und/oder heterocyclische Polyisocyanate geeignet, wie sie z.B. von W. Siefken in Justus Liebigs Annalen der Chemie, 562, Seiten 75 bis 136, beschrieben werden, beispielsweise solche der Formel

$$Q\ (NCO)_n$$

in der

n = 2-4, vorzugsweise 2, und

Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6-15, vorzugsweise 6-13 C-Atomen,
oder einen araliphatischen Kohlenwasserstoffrest mit 8-15, vorzugsweise 8-13 C-Atomen,

bedeuten.

Bevorzugt sind die technisch leicht zugänglichen Polyisocyanate, z.B. das 2,4- und 2,6-Toluylendiisocyanat, sowie beliebige Gemische dieser Isomeren ("TDI"), insbesondere Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen und/oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat oder vom 4,4'- und/oder 2,4'-Diphenylmethandiisocyanat ableiten.

Als Polyole kommen beispielsweise solche mit einem Molekulargewicht von 400 bis 10 000 in Frage, insbesondere 2 bis 8 Hydroxylgruppen aufweisende Polyester und Polyether. Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet worden sein.

In Frage kommende, mindestens 2, in der Regel 2 bis 8, vorzugsweise 2 bis 3 Hydroxylgruppen aufweisende Polyether können z.B. durch Polymerisation von Epoxiden wie Ethylenoxid, Propylenoxid, Butylenoxid, Tetrahydrofuran, Styroloxid oder Epichlorhydrin mit sich selbst oder durch Anlagerung dieser Epoxide an Startkomponenten mit reaktionsfähigen Wasserstoffatomen wie Wasser, Alkohole, Ammoniak oder Amine hergestellt worden sein.

Als Polyole kommen zusätzlich auch solche mit einem Molekulargewicht von 32 bis 400 in Frage, die dann als Kettenverlängerungsmittel oder Vernetzungsmittel dienen. Diese Verbindungen können beispielsweise 2 bis 8, vorzugsweise 2 bis 4, gegenüber Isocyanaten reaktionsfähige Wasserstoffatome aufweisen. Als Beispiele für derartige Verbindungen seien genannt: Ethylenglykol, Propylenglykol-1,2, Propylenglykol-1,3, Butylenglykol-1,4, Butylenglykol-2,3, Pentandiol-1,5, Hexandiol-1,6, Octandiol-1,8, Neopentylglykol, Glycerin, Trimethylolpropan, Addukte des Trimethylolpropans mit 1 bis 5 Molen Ethylenoxid, Hexantriol-1,2,6, Trimethylolethan, Pentaerythrit, Mannit, Diethylenglykol, Triethylenglykol, Tetraethylenglykol und höhere Polyethylenglykole mit einem Molekulargewicht bis 400.

Als Blähgraphit kommen beispielsweise bekannte Einlagerungsverbindungen von $SO_x$, $NO_x$, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich.

Im allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein.

Bezogen auf das anwendungsfertige Brandschutzelement können beispielsweise 1 bis 50 Gew.-% Blähgraphit darin enthalten sein. Vorzugsweise liegt dieser Blähgraphitgehalt bei 2 bis 20 Gew.-%, insbesondere bei 2 bis 10 Gew.-%.

Das Raumgewicht erfindungsgemäßer Brandschutzelemente kann beispielsweise im Bereich 100 bis 1000 $kg/m^3$ liegen. Vorzugsweise beträgt es 150 bis 600 $kg/m^3$ .

Es ist ein wesentliches Merkmal der erfindungsgemäßen Brandschutzelemente, daß sie Blähgraphit in Kombination mit einer oder mehreren Komponenten aus der Gruppe umfassend phosphorhaltige Polyole der angegebenen Formel, Borate, Melaminsalze und Ethylendiaminsalze enthalten. Die phosphorhaltigen Polyole entsprechen der Formel

$$(RO)_2PO\text{-}CH_2\text{-}N{=}(CHX\text{-}CHX\text{-}OH)_2,$$

in der

R für $C_1$-$C_8$-Alkyl oder $C_1$-$C_8$-Hydroxyalkyl, vorzugsweise für Ethyl oder Hydroxyethyl steht und

X Wasserstoff oder Methyl, vorzugsweise Wasserstoff

bedeuten.

Als Borate kommen beispielsweise salzartige Borate in Frage, insbesondere Kalzium-, Magnesium- und Zinkborate. Bevorzugt sind kalzium- und magnesiumhaltige Bormineralien, insbesondere Colemanit.

Melaminsalze können z.B. sein: Melaminphosphat, Dimelaminphosphat, Melamindiphosphat, Melaminborat, Melaminphthalat, Melaminoxalat, Melamincyanurat und Melaminsulfat. Die Salzbildung muß nicht immer mit stöchiometrischen Mengen von Melamin und Säure stattgefunden haben, beispielsweise können auch Umsetzungsprodukte aus 1 Mol Melamin und 0,5 bis 1 Mol Säure (z.B. ortho-Phosphorsäure) oder Mischungen aus Melamin und Melaminsalzen eingesetzt werden. Weiterhin können Ethylendiaminsalze verwendet werden, wie Ethylendiaminphosphate. Bei den Ethylendiaminphosphaten kann es sich z.B. um Salze, Mischsalze mit anderen Kationen und/oder Teilsalze des Ethylendiamins mit Sauren des Phosphors wie Ortho-, Meta-, Pyro- oder Polyphosphorsäure, phosphoriger Säure, Phosphonsäuren, Phosphinsäuren, sauren Estern, sauren Teilestern und Amide der Phosphorsäure handeln. Von besonderem Interesse ist das Neutralisationsprodukt aus Ethylendiamin und ortho-Phosphorsäure, was leicht durch Vereinigung der Komponenten in wäßrigem Medium und anschließendem Eindampfen hergestellt werden kann. Auch Kombinationen aus Ethylendiaminphosphat und Melamin und/oder Melamin-Phosphat können eingesetzt werden, beispielsweise solche, die 100 bis 20, vorzugsweise 70 bis 30 Gew.-% Ethylendiaminphosphat enthalten.

Die Korngröße der Borate und der Aminsalze kann beispielsweise im Bereich 0,1 bis 500 µm liegen.

Bezogen auf ein erfindungsgemäßes Brandschutzelement liegen darin 2 bis 30 Gew.-% phosphorhaltige Polyole, 2 bis 30 Gew.-% Borate und/oder 2 bis 30 Gew.-% Aminsalze vor, wobei die Summe dieser 3 Komponenten nicht mehr als 50 Gew.-% beträgt.

Die Herstellung erfindungsgemäßer Brandschutzelemente kann beispielsweise so erfolgen, daß man dem Reaktionsgemisch zur Herstellung des jeweiligen Schaumstoffs oder einer Komponente davon Blähgraphit und phosphorhaltiges Polyol der angegebenen Formel und/oder Borat und/oder Melaminsalz und/oder Ethylendiaminsalz zufügt. Man kann diese erfindungswesentlichen Bestandteile auch Latexdispersionen zufügen und diese dann schaumig schlagen und aushärten oder koagulieren lassen. Man kann die erfindungswesentlichen Bestandteile auch in beispielsweise wäßriger Dispersion zur Impragnierung oder Tränkung von bereits hergestellten Schaumstoffen verwenden. Die Formgebung erfindungsgemäßer Brandschutzelemente kann dem jeweiligen Anwendungszweck angepaßt werden und bereitet dem Fachmann keine Schwierigkeiten, da sie auf dem Gebiet von Schaumstoffen im Prinzip bekannt sind.

Erfindungsgemäße Brandschutzelemente können beispielsweise zum Verschließen von Fugen, Hohlräumen, Wanddurchbrüchen, Rohrdurchführungen, aber auch zum Abdecken beliebiger Gegenstände verwendet werden. Sie haben gegebenenfalls Dehn- und Polsterfunktion, vor allem aber Abdichtaufgaben gegen Hitze und Brandgase, die auch bei Beflammung längere Zeit bestehen bleiben. Sie können in beliebiger Form in den Handel gebracht und angewendet werden, beispielsweise als Flocken, Granulat, Kugeln, Bandprofil, Rohrprofil, Gitter, Stopfen, Platten, Quader, Pyramiden, Halbschalen, Hohlkörper, Manschetten, Schaumfolien oder beliebige andere Formteile. Erfindungsgemäße Brandschutzelemente können gegebenenfalls Bohrungen, Trennschnitte oder Faltungen aufweisen. Sie können gegebenenfalls vor Ort auf beliebige Weise zusammengefügt werden, beispielsweise auch puzzleartig oder als Schüttung, gegebenenfalls unter Anwendung von Klebstoffen; sie können gegebenenfalls auch erst vor Ort hergestellt werden.

Erfindungsgemäße Brandschutzelemente können auch mit anderen Brandschutzmaterialien kombiniert werden und allein oder zusammen mit anderen Brandschutzmaterialien als Konstruktionsmaterialien verwendet werden oder Teile von Konstruktionselementen sein. Als Konstruktionselemente seien beispielsweise genannt: Verschlußelemente, Dichtungsprofile, Wände, Platten, Manschetten, Kabelschotts, Rohrschotts, Träger, Pfeiler und Zwischendecken. Erfindungsgemäße Brandschutzelemente können harten, flexiblen, elastischen oder weichen Charakter aufweisen.

Die Verwendung erfindungsgemäßer Brandschutzelemente als Konstruktionsmaterial kann beispielsweise beim Fahrzeug-, Schiff-, Waggon-, Flugzeug-, Apparate- und Möbelbau, aber auch im Anlagen-, Hoch- und Tiefbau und im Raumausstattungsgewerbe erfolgen.

Als Anwendungsbeispiele seien folgende genannt:

Matten zum Ummanteln oder Abdecken von Kabeltrassen, sowie Klimakanälen und Holz- und Stahlkonstruktionen, Beschichtungen von Wand- und Deckenelementen, von Steinwollmatten für Schotts, von Geweben für Fugenverschlüsse sowie von Gehäusen elektronischer Geräte,
Stränge und Profile für Fugenverschlüsse im Bau- und Apparatebauwesen,
Halbschalen zum Umhüllen von Kabeln, Rohren oder Stahlstrang-Abspannungen im Bauwesen,
Streifen in Türrahmen und Fenstern,
Granulate und Platten zur Füllung von Zwischenräumen bei doppelwandigen Wänden im Bauwesen, im Waggon- und Fahrzeugbau,
Granulate und Schaumplatten zur Füllung von Brandschutztüren,
Blöcke, Platten, Matten und Stopfen für Kabeldurchführungen (Schotts) im Bauwesen und Schiffsbau,
Bandagen und Manschetten-Einlageteile für Rohrdurchführungen (Schotts),
Auflageschichten auf Sitze oder Armlehnen im Fahrzeug-, Waggon- und Möbelbau,
Zweikomponenten-Reaktionsgemische zum Verfüllen von Kabel- und Rohrdurchführungen,
bei Erhitzung sich schließende Lüftungsgitter im Bauwesen,
Schallschluckelemente in Form von konturierten Platten und beschichtete Bleche und Platten für Brandschutzzwecke.

Die erfindungsgemäßen Brandschutzelemente zeichnen sich in Brandfall insbesondere durch die Ausbildung einer festen Kohlenstoffschaum-Struktur, geringe Flammenerosion, niedrige Rauchdichte, schnelles Verlöschen und dadurch aus, daß anschmelzendes Material überraschenderweise nicht abläuft oder wegrutscht. Außerdem haben die erfindungsgemäßen Brandschutzelemente den Vorteil, daß sie bei Herstellung, Zurichtung und Einbau staubfrei gehandhabt werden können.

In den folgenden Beispielen beziehen sich Teile und Prozente, falls nichts anderes angegeben ist, auf das Gewicht.

Beispiele

Charakterisierung einiger in den Beispielen häufiger verwendeten Substanzen:

Polyisocyanat A

Polymethylen-Polyphenyl-Polyisocyanat erhalten aus einem rohen Phosgenierungsprodukt eines Anilin/Formaldehyd-Kondensates durch Abdestillieren von soviel Diisocyanatodiphenylmethan, daß der Destillationsrückstand bei 25°C eine Viskosität von 100 cP aufweist (2-Kernanteil: 59,7 %; 3-Kernanteil: 21,3 %; Anteil höherkerniger Polyisocyanate: 19,0 %).

Polyisocyanat B

Polymethylen-Polyphenyl-Polyisocyanat erhalten wie bei Polyisocyanat A beschrieben, jedoch Abdestillation von Diisocyanatodiphenylmethan bis der Destillationsrückstand bei 25°C eine Viskosität von 400 cP aufwies (2-Kernanteil: 45,1 %; 3-Kernanteil: 22,3 %; Anteil an höherkernigen Polyisocyanaten: 32,6 %).

Polyol 1

Durch Addition von 45 % Propylenoxid und 55 % Ethylenoxid an Trimethylolpropan erhaltenes Polyether-Polyol, OH-Zahl 56.

Polyol 2

Durch Addition von 83 % Propylenoxid und 17 % Ethylenoxid an Trimethylolpropan erhaltenes Polyether-Polyol, OH-Zahl 36.

Polyol 3

Durch Addition von Ethylenoxid an Trimethylolpropan erhaltenes Polyether-Polyol, OH-Zahl 550.

Polyol 4

Durch Addition von 5 % Propylenoxid und 95 % Ethylenoxid an Glycerin erhaltenes Polyether-Polyol, OH-Zahl 250.

Phosphor-Diol P

Phosphorhaltiges Kondensationsprodukt von technischer Qualität mit der idealisierten Struktur:

$$(C_2H_5O)_2POCH_2N(C_2H_4OH)_2.$$

Rotes Eisenoxidpigment

Bayferrox® M318, Bayer AG.

Aktivator 1

Permethyliertes Diethylentriamin.

Aktivator 2

Zinn(II)-dioctoat.

Glycerinester G

Ester aus Glycerin und Fettsäuren mit der Struktur

$$CH_2-COO-C_7H_{15}$$
$$|$$
$$CH-COO-C_9H_{19}$$
$$|$$
$$CH_2-COO-C_7H_{15}.$$

Blähgraphit

In der Wärme expandierender Graphit, wobei Schwefeloxide entweichen. Pulver, dessen plättchenförmige Teilchen zu 90 % einen Durchmesser von unter 0,5 mm haben. Im Handel erhältlich unter der Bezeichnung Sigraflex® FR 90-60/80 der Firma Sigri.

Colemanit

Kalzium- Bor-Mineral mit der idealisierten Summenformel

$$Ca_2B_6O_{11} \cdot 5H_2O.$$

Beispiel 1

100 Teile Polyol 4, 60 Teile Phosphor-Diol P, 2 Teile rotes Eisenoxidpigment, 15 Teile Aluminiumhydroxid, 50 Teile Melaminphosphat, 1 Teil Wasser und 20 Teile Blähgraphit wurden mit 100 Teilen eines Polyisocyanats (Desmodur® 44 V 20, Bayer AG) in einer Form, die einen konischen Stopfen ergab, verrührt. Durch den inhärenten Wassergehalt wurde ein Schaumstoff mit einem Raumgewicht von 210 kg/m³ erhalten, der weichflexibel war. In einer analog hergestellten Materialprobe wurde der Blähgraphit durch Talkum ersetzt.

Beide Schaumstoffstopfen wurden mit der flachen Seite auf ein leicht geneigtes und auf 500°C erhitztes Blech gelegt. Der talkumhaltige Stopfen begann unter Aufschäumen und Schmelzen auf dem geneigten Blech hinabzugleiten, während der blähgraphithaltige Stopfen unter Aufschäumen liegenblieb und nicht abgleitete.

Dieser Versuch zeigt, daß der an und für sich durch Talkumzusatz brandwidrig ausgerüstete Schaumstoff bei Beflammung abschmilzt, während der Blähgraphitzusatz ein Abschmelzen bei Beflammung verhindert. Dieser Effekt ist insbesondere dann wichtig, wenn die Verschlußelemente auf glatten Flächen, z.B. Metallflächen, aufliegen.

Beispiel 2

75 Teile Polyol 1 und 30 Teile Phosphor-Diol P, 5 Teile Blähgraphit, 10 Teile pulverförmigen Colemanit, 0,6 Teile Wasser, 0,7 Teile Aktivator 1 und 0,4 Teile Glycerinester G wurden intensiv miteinander vermischt. Zu dieser Mischung wurden 47 Teile des Polyisocyanats B zugegeben und homogen verrührt. Dieses Reaktionsgemisch wurde in eine Form mit den Abmessungen 10x20x5 cm gegossen und frei aufschäumen gelassen. Die Schaumhöhe betrug im Mittel 4,2 cm, was einem Raumgewicht von 190 kg/m³ entspricht. Der erhaltene, weichelastische Schaumblock wurde durch Abschneiden der gewölbten Oberfläche in eine Quaderform überführt. Derartige quaderförmige Schaumstoffteile eignen sich vorzüglich zum Verschließen von Kabeldurchführungen in Wänden von Gebäuden. Dies wurde in folgender Weise in einem Kleinbrandofen (in Anlehnung an DIN 4102) getestet:

Ein Gasbetonblock mit den Abmessungen 50x50x20 cm wurde in der Mitte mit einer 30x30 cm großen Öffnung versehen. Durch diese Öffnung wurde ein festverschnürtes Kabelbündel aus 10 Elektrokabeln (Typ NYM-J 4x6, PVC-Kabelmantel, Durchmesser je Kabel 15 mm) auf die Unterseite der Öffnung so aufgelegt, daß 25 cm Kabellänge zur beflammten Seite hin herausragten. Die Gesamtlänge des Kabelbündels betrug 70 cm. Das gesamte verbleibende Volumen wurde mit den Schaumstoffquadern in der Weise aufgefüllt, daß man schichtweise und unter Zusammenpressen der einzelnen Quader zu einer fugenfreien Abdichtung der Öffnung gelangte. Das so erhaltene Kabelschott-Muster wurde in eine entsprechend große Öffnung in der Seite des Kleinbrandofens eingebaut und einer Beflammung von 90 Min. ausgesetzt, wobei die Beflammung der Einheitstemperatur/Zeit-Kurve gemäß DIN 4102 entsprach. Nach 90 Min Beflammung war das Kabelschott noch dicht. Die Temperaturen auf der Außenseite des Schotts betrugen: auf den Quadern 70°C, auf den Kabelmänteln 150°C.

Beispiele 3 bis 11

Analog der Arbeitsweise von Beispiel 2 wurden weitere erfindungsgemäße Brandschutzelemente hergestellt. Die Mischungsbestandteile sind in der folgenden Tabelle 1 zusammengestellt.

Tabelle (Zahlenangaben in Gewichtsteilen):

| Beispiel-Nummer | 3 | 4 | 5 | 6 | 7 | 8 | 9 | 10 | 11 |
|---|---|---|---|---|---|---|---|---|---|
| Polyol 1 | 70 | - | - | - | 100 | 50 | 80 | 70 | - |
| Polyol 2 | - | 100 | 100 | 100 | - | 30 | - | - | 100 |
| Polyol 3 | - | - | - | - | - | 20 | 20 | - | 14 |
| Polyol 4 | - | - | - | - | - | - | - | 30 | - |
| Butandiol-1,4 | - | 6 | 6 | 6 | 6 | - | - | - | 4 |
| Blähgraphit | 5 | 7 | 7 | 7 | 10 | 4 | 7 | 5 | 10 |
| Colemanit | 30 | 40 | 40 | 40 | 10 | 30 | 13 | 5 | 10 |
| Phosphor-Diol P | 30 | - | 8 | 6 | - | - | - | - | - |
| Wasser | 0,6 | 0,7 | 0,6 | 0,8 | 1 | 1,6 | 0,7 | 1 | 1 |
| Aktivator 1 | 0,5 | 0,2 | 0,2 | 0,2 | 0,2 | 0,3 | 0,1 | 0,2 | 0,2 |
| Aktivator 2 | - | 0,5 | 0,5 | 0,3 | 0,4 | - | 0,2 | 0,2 | 0,4 |
| Glycerinester G | 0,3 | 0,4 | 0,4 | 0,5 | - | - | 1 | - | - |
| Polyisocyanat A | - | 38 | 44 | 46 | - | - | - | - | - |
| Polyisocyanat B | 51 | - | - | - | 47 | 44 | 53 | 47 | 44 |
| Raumgewicht ($kg/m^3$) | 170 | 170 | 300 | 190 | 250 | 100 | 100 | 150 | 175 |

Beispiele 12 bis 16

Folgende Reaktionsmischungen wurden analog der in Beispiel 2 beschriebenen Arbeitsweise hergestellt:

Tabelle 2

| Beispiel-Nummer | 12 | 13 | 14 | 15 | 16*) |
|---|---|---|---|---|---|
| Polyol 2 | 200 | 200 | - | - | - |
| Polyol 3 | 16 | 16 | - | - | - |
| Polyol 4 | - | - | 132 | 132 | 132 |
| Blähgraphit | 14 | 14 | 21 | 21 | - |
| Colemanit | 120 | 120 | - | - | - |
| Phosphor-Diol P | 16 | - | 79 | 79 | 79 |
| Aluminiumhydroxid | - | - | 20 | 20 | 20 |
| Melaminphosphat | - | 20 | 66 | 66 | 66 |
| rotes Eisenoxidpigment | 2 | 2 | 3 | 3 | 3 |
| Wasser | 1 | 1 | 1 | 1,2 | 1,2 |
| Aktivator 1 | 1 | 1 | - | - | - |
| Glycerinester G | - | - | 0,5 | 0,5 | 0,5 |
| Polyisocyanat A | 72 | 54 | - | - | - |
| Polyisocyanat B | - | - | 120 | 120 | 120 |

*) Vergleichsbeispiel

Die Reaktionsgemische entsprechend den Beispielen 12 bis 16 wurden in eine offene runde Form mit konischem Querschnitt in jeweils solcher Menge gegossen, daß das frei aufschäumende Gemisch einen weichelastischen Stopfen ergab, dessen Höhe am Rand 5 cm und in der Mitte 6 cm betrug und dessen unterer Durchmesser 16,5 cm und oberer Durchmesser 17,5 cm betrug.

Zur Prüfung der Wirksamkeit als Brandschutzelemente zum Verschließen von Öffnungen in Decken (Deckenschotts) wurden verschiedene Schaumstoff-Formteile in Form von Stopfen mit den obigen Abmessungen hergestellt. Die Unterseite der Stopfen war wie in Tabelle 3 angegeben, präpariert, die Oberseite der Stopfen war die sich jeweils bildende Schaumstoffhaut an der Oberseite des frei aufschäumenden Reaktionsgemisches.

Der Aufbau der Deckenschott-Muster erfolgte in der Weise, daß in Gasbetonplatten mit den Abmessungen 50x50x10 cm jeweils 4 runde Öffnungen gesägt wurden, die mit jeweils 2 gleichartigen Stopfen pro Öffnung verschlossen wurden. Zum Verschließen der Öffnungen wurden die Seiten der Stopfen mit einer gut haftenden Brandschutzpaste bestrichen, so daß sich nach dem Verdunsten des Wassers eine Schichtdicke von 1 mm ergab. Die Stopfen wurden dann etwas zusammengedrückt und so in die Öffnungen geschoben, daß sich die Stopfenunterseiten in der Mitte der Gasbetonplatten befanden und die oben beschriebene Stopfenoberseiten nach außen zeigten. Auf diese Weise war das gesamte Volumen einer Öffnung in der Gasbetonplatte ausgefüllt.

Diese Deckenschott-Muster wurden jeweils in eine entsprechend große Öffnung in der Decke des Kleinbrandofens (erstellt in Anlehnung an DIN 4102) eingebaut. Die Beflammung erfolgte nach der Einheits-Temperatur/Zeit-Kurve gemäße DIN 4102 und betrug 120 Min. Es wurde der Feuerdurchtritt bei den verschiedenen Stopfen ermittelt. Die Ergebnisse sind in Tabelle 3 zusammengestellt.

Tabelle 3

| Reaktionsmischung gemäß Beispiel-Nummer | Raumgewicht des Stopfenschaums kg/m³ | Unterseite der Stopfen | Ergebnis der Beflammung |
|---|---|---|---|
| 12 | 250 | unbehandelt | nach 95 Min. Feuerdurchtritt |
| 12 | 250 | 3 mm starke Fomox® WMP-Schicht | nach 120 Min. noch kein Feuerdurchtritt |
| 12 | 250 | $SiO_2$-Gewebe 1.300 g/m² | nach 120 Min. noch kein Feuerdurchtritt |
| 12 | 250 | Glasgewebe 400 g/m² | nach 110 Min. Feuerdurchtritt |
| 13 | 250 | unbehandelt | nach 95 Min. Feuerdurchtritt |
| 14 | 305 | 3 mm starke Fomox® WMP-Schicht | nach 120 Min. noch kein Feuerdurchtritt |
| 14 | 310 | 3 mm starke Fomox® WMP-Schicht | nach 120 Min. noch kein Feuerdurchtritt |
| 15 | 255 | unbehandelt | nach 95 Min. Feuerdurchtritt |
| 15 | 260 | unbehandelt | nach 110 Min. Feuerdurchtritt |
| 16 (Vergleichsbeispiel) | 260 | unbehandelt | nach 65 Min. Feuerdurchtritt |

Fomox® WMP ist eine Brandschutzpaste der Bayer AG

Beispiele 16 bis 18

Folgende Reaktionsgemische wurden analog der in Beispiel 2 beschriebenen Weise hergestellt:

Tabelle 4

| Beispiel-Nummer | 16 | 17 | 18 |
|---|---|---|---|
| Polyol 2 | 200 | 200 | 200 |
| Butandiol-1,4 | 12 | 12 | 12 |
| Phosphor-Diol P | 12 | - | 12 |
| Colemanit | 120 | 120 | 80 |
| Blähgraphit | 14 | 14 | 14 |
| Melaminphosphat | - | 20 | - |
| Wasser | 1,6 | 1,2 | 1,4 |
| Aktivator 1 | 0,6 | 2 | 0,4 |
| Aktivator 2 | 0,4 | - | 0,8 |
| rotes Eisenoxidpigment | 2 | 2 | - |
| Polyisocyanat A | 92 | 72 | 88 |

Die Reaktionsgemische wurden jeweils in einer solchen Menge in eine verschließbare Form mit dem Hohlraum 40x40x0,7 cm eingebracht, die nach dem Aufschäumen und Ausreagieren des Gemisches eine Schaumstoffplatte mit einem Raumgewicht von 250 kg/m³ ergab.

Die Flammwidrigkeit dieser als Auflagen auf Sitzpolster geeigneten Brennschutzelemente wurde in einer Vorrichtung gemäß British Standard BS 5852 Part 2 geprüft. Auf die 6,8 cm dicke Polyurethanschaumstoffmatte des Sitzgestells wurde die nach Beispiel 18 erhaltene Brandschutzauflage aufgelegt. Auf diese Auflage wurde das zu entflammende Holzgestell Crib 5 an der vorgeschriebenen Stelle positioniert. Ergebnis der Beflammung: 7 Min. nach Entflammungsbeginn verlöschten die Flammen. Der Gewichtsverlust durch das Feuer betrug 27 g und der Durchmesser des verbrannten Bereiches der Brandschutzauflage 10 cm.

Beispiel 19

Eine Mischung aus 100 Teilen Polyol 4, 60 Teilen Phosphor-Diol P, 15 Teilen Aluminiumhydroxid, 50 Teilen Melaminphosphat, 2 Teilen rotem Eisenoxidpigment, 0,9 Teilen Wasser, 0,4 Teilen Glycerinester G und 20 Teilen Blähgraphit wurden mit 120 Teilen des Polyisocyanats B intensiv vermischt. Das erhaltene Reaktionsgemisch wurde in eine offene Form mit der Grundfläche 10x20 cm und der Höhe 15 cm gegossen und frei aufschäumen gelassen. Man erhielt einen harten Schaumstoff vom Raumgewicht 200 kg/m³, der sich gut in Platten zerschneiden ließ. Derartige Schaumstoffplatten sind als feuerhemmende Füll- und Versteifungselemente in Brandschutztüren oder in Zwischenwänden beim Haus- und Waggonbau geeignet.

Beispiel 20

20 Teile Baumwollwatte wurden mit einer Mischung aus 3 Teilen sekundärem Ammoniumphosphat und 2 Teilen Blähgraphit intensiv vermischt. Man erhielt eine Watte, in der die Zusatzstoffe locker eingebettet sind. Aus dieser Watte wurde ein Stopfen geformt. Mit diesem Stopfen wurde eine in einem Ziegelstein befindliche Durchbohrung, die einen Durchmesser von 1,5 cm hat, verschlossen. Die so verschlossene Bohrung wurde in Achsrichtung mit einem Bunsenbrenner beflammt. Dabei brannte ein Teil der Watte ab, dann aber bildete sich ein fester Verschluß aus einem Gemisch von karbonisierter Baumwolle und aufgeblähtem Graphit, der das Loch über mehr als 60 Min. gegen Flammendurchtritt verschloß. Der Versuch wurde mit einer Watte wiederholt, in der anstelle des Blähgraphits Talkum eingearbeitet wurde. Der Verschluß war in diesem Fall nach weniger als 15 Min. durchgebrannt.

## Patentansprüche

1. Brandschutzelemente auf der Basis von Schaumstoffen, die Blähgraphit und gegebenenfalls übliche Zusätze enthalten, dadurch gekennzeichnet, daß sie zusätzlich 2 bis 30 Gew.-% phosphorhaltige Polyole der Formel $(RO)_2PO-CH_2-N=(CHX-CHX-OH)_2$, in der R für $C_1$-$C_8$-Alkyl oder $C_1$-$C_8$-Hydroxyalkyl steht und X Wasserstoff oder Methyl bedeutet, 2 bis 30 Gew.-% Borate und/oder 2 bis 30 Gew.-% Melamin- und/oder Ethylendiaminsalze enthalten, wobei die Summe dieser 3 Komponenten nicht mehr als 50 Gew.-% beträgt.

2. Brandschutzelemente nach Anspruch 1, dadurch gekennzeichnet, daß es sich bei den Schaumstoffen um solche auf der Basis von Polyurethanen handelt.

3. Brandschutzelemente nach Ansprüchen 1 und 2, dadurch gekennzeichnet, daß sie zusätzlich in üblicher Weise brandwidrig ausgerüstet sind und/oder übliche brandwidrige Zusatzstoffe, übliche sonstige Füllstoffe und/oder übliche Hilfsstoffe enthalten.

4. Brandschutzelemente nach Ansprüchen 1 bis 3, dadurch gekennzeichnet, daß sie als Blähgraphit Einlagerungsverbindungen von $SO_x$, $NO_x$, Halogen und/oder starken Säuren in Graphit enthalten.

5. Brandschutzelemente nach Ansprüchen 1 bis 4, dadurch gekennzeichnet, daß sie 1 bis 50 Gew.-% Blähgraphit, bezogen auf das anwendungsfertige Brandschutzelement, enthalten.

6. Verfahren zur Herstellung von Brandschutzelementen gemäß Anspruch 1, dadurch gekennzeichnet, daß man dem Reaktionsgemisch zur Herstellung des jeweiligen Schaumstoffes oder einer Komponente davon Blähgraphit und phosphorhaltiges Polyol und/oder Borat und/oder Melamin- und/oder Ethylendiaminsalz zufügt.

7. Verwendung von Brandschutzelementen gemäß Ansprüchen 1 bis 5 als Konstruktionsmaterial.

8. Verwendung nach Anspruch 7, dadurch gekennzeichnet, daß es sich bei den Konstruktionsmaterialien um Verschlußelemente, Dichtungsprofile, Wände, Platten, Manschetten, Kabelschotts, Rohrschotts, Träger, Pfeiler und/oder Zwischendecken handelt.

9. Verwendung von Brandschutzelementen nach Anspruch 7 als Konstruktionsmaterial beim Fahrzeug-, Schiffs-, Waggon-, Flugzeug-, Apparate- und/oder Möbelbau sowie im Anlagen-, Hoch- und Tiefbau und im Raumausstattungsgewerbe.

## Claims

1. Fire protection elements based on foams containing expandable graphite with or without customary additaments, characterized in that they additionally contain 2 to 30% by weight of phosphorus-containing polyols of the formula $(RO)_2PO-CH_2-N=(CHX-CHX-OH)_2$, in which R represents $C_1$-$C_8$-alkyl or $C_1$-$C_8$-hydroxyalkyl and X denotes hydrogen or methyl, 2 to 30% by weight of borates and/or 2 to 30% by weight of melamine and/or ethylenediamine salts, the sum of these 3 components being not more than 50% by weight.

2. Fire protection elements according to Claim 1, characterized in that the foams are based on polyurethanes.

3. Fire protection elements according to Claims 1 and 2, characterized in that they have additionally been given a fire resistant finish in the usual manner and/or contain customary fire resistant additives, customary other fillers and/or customary auxiliaries.

4. Fire protection elements according to Claims 1 to 3, characterized in that the expandable graphite contained in them comprises intercalation compounds of $SO_x$, $No_x$, halogen and/or strong acids in graphite.

5. Fire protection elements according to Claims 1 to 4, characterized in that they contain 1 to 50% by weight of expandable graphite, relative to the ready-for-use fire protection element.

6. Process for the production of fire protection elements according to Claim 1, characterized in that expandable graphite and phosphorus-containing polyol and/or borate and/or melamine and/or ethylenediamine salt are added to the reaction mixture for the preparation of the particular foam or a component thereof.

7. Use of fire protection elements according to Claims 1 to 5 as construction material.

8. Use according to Claim 7, characterized in that the construction materials are closure elements, sealing profiles, walls, panels, sleeves, cable bulkheads, pipe bulkheads, beams, columns and/or false ceilings.

9. Use of fire protection elements according to Claim 7 as construction material in the construction of motor vehicles, ships, wagons, aircraft, apparatus and/or in the manufacture of furniture and in the construction of plants and buildings and in civil engineering and interior design.

## Revendications

1. Eléments de protection contre l'incendie à base de mousses qui contiennent du graphite expansé et, le cas échéant, des additifs classiques, caractérisés en ce qu'ils contiennent en outre 2 à 30 % en poids de polyols contenant du phosphore, de formule $(RO)_2PO-CH_2-N=(CHX-CHX-OH)_2$ dans laquelle R est un groupe alkyle en $C_1$ à $C_8$ ou hydroxyalkyle en $C_1$ à $C_8$ et X désigne l'hydrogène ou le groupe méthyle, 2 à 30 % en poids de borates et/ou 2 à 30 % en poids de sels de mélamine et/ou d'éthylènediamine, la somme de ces trois composants ne s'élevant pas à plus de 50 % en poids.

2. Eléments de protection contre l'incendie suivant la revendication 1, caractérisés en ce que les mousses sont des mousses à base de polyuréthannes.

3. Eléments de protection contre l'incendie suivant les revendications 1 et 2, caractérisés en ce qu'ils sont en outre ignifugés de façon classique et/ou contiennent des additifs classiques d'ignifugeage, d'autres charges classiques et/ou des substances auxiliaires classiques.

4. Eléments de protection contre l'incendie suivant les revendications 1 à 3, caractérisés en ce qu'ils contiennent comme graphite expansé des composés d'insertion de $SO_x$, $NO_x$, d'un halogène et/ou d'acides forts dans du graphite.

5. Eléments de protection contre l'incendie suivant les revendications 1 à 4, caractérisés en ce qu'ils contiennent 1 à 50 % en poids de graphite expansé, par rapport à l'élément prêt à être utilisé pour la protection contre l'incendie.

6. Procédé de fabrication d'éléments de protection contre l'incendie suivant la revendication 1, caractérisé en ce qu'on ajoute au mélange réactionnel de production de la mousse correspondante ou d'un composant de cette mousse, du graphite expansé et un polyol contenant du phosphore et/ou un borate et/ou un sel de mélamine et/ou d'éthylènediamine.

7. Utilisation d'éléments de protection contre l'incendie suivant les revendications 1 à 5 comme matériau de construction.

8. Utilisation suivant la revendication 7, caractérisée en ce que les matériaux de construction sont des éléments de fermeture, des profilés étanches, des cloisons, des plaques, des garnitures, des cloisons étanches pour câbles et tubes, des poutrelles, des piliers et/ou des faux plafonds.

9. Utilisation d'éléments de protection contre l'incendie suivant la revendication 7 comme matériau de construction dans l'industrie automobile, navale, ferroviaire, aéronavale, dans la construction d'appareils et/ou de mobilier ainsi que dans la construction d'installations technologiques, dans la construction immobilière et le Génie Civil et dans les métiers d'équipement intérieur.